# EUROPÄISCHE PATENTANMELDUNG

(11) **EP 1 717 010 A1**
(43) Veröffentlichungstag der Anmeldung: **02.11.2006**
(21) Anmeldenummer: 06405128.7
(22) Anmeldetag: 27.03.2006
(51) Int. Cl.: B29C 45/23, B29C 45/28, B29C 44/34

(54) **Vorrichtung mit Nadelverschlussdüse für eine Spritzgiessmaschine**

(30) Priorität: 25.04.2005 EP 05405313
(71) Anmelder: Sulzer Chemtech AG, 8404 Winterthur (CH)
(72) Erfinder: Habibi-Naini, Sasan, 8486 Rikon (CH)
(74) Vertreter: Sulzer Management AG

(57) **Zusammenfassung**

Die Vorrichtung mit Nadelverschlussdüse (1) ist für eine Spritzgiessmaschine oder ein Spritzgiesswerkzeug zum Verarbeiten einer Polymerschmelze vorgesehen. Diese Vorrichtung umfasst einen Kanal (2) für einen Schmelzestrom, eine Düse (3) am Ausgang des Kanals, eine im Kanal geführte Verschlussnadel (4) zum Verschliessen der Düse und einen Antriebszylinder (5') mit Kolben (6), der als Nadelantrieb (5) die Verschlussnadel bewegt. Dabei ist der Kolben mittels einem fluiden Arbeitsmittel antreibbar. Der Antriebszylinder ist innerhalb des Kanals angeordnet und ist Teil einer hydraulischen Einrichtung, bei der das fluide Arbeitsmittel ein verdichtetes Gas ist, dessen Druck grösser als 50 bar ist.

## Beschreibung

Die Erfindung betrifft eine Vorrichtung mit Nadelverschlussdüse für eine Spritzgiessmaschine gemäss Oberbegriff von Anspruch 1 sowie Anlagen mit Spritzgiessmaschine und erfindungsgemässer Vorrichtung.

Ein Tagungsbericht (Internationale Jahrestagung Spritzgiessen 2004, VDI-Verlag, Düsseldorf 2004, p. 357 - 367) gibt einen kurzen Überblick über neuere Entwicklungen im Zusammenhang mit einer Heisskanaltechnik, die in der Fertigung von Spritzgussteilen aus Kunststoff angewendet wird. Diese Technik betrifft beheizte Angüsse in Spritzgiesswerkzeugen. Bei komplizierteren Spritzgiesswerkzeugen kommen Angusssysteme mit jeweils einer Mehrzahl von dicht angeordneten Kanälen zum Einsatz. Durch das Angusssystem wird geschmolzener Kunststoff gesteuert in diverse Zonen des Spritzgiesswerkzeugs, in sogenannte "Formnester" oder auch in Bereiche von Formnestern geleitet. Heizungen an den schmelzeführenden Kanälen sorgen dafür, dass die in den Kanälen enthaltene Schmelze nicht erstarrt. Vorteilhafterweise entstehen mit der Heisskanaltechnik am Spritzgussteil keine Angussteile, was in der Regel ein Spritzgiessen mit höherer Kadenz ermöglicht und ein Entfernen von Angussteilen erübrigt. Jeder Heisskanal enthält an einer Mündung oder stromaufwärts vor der Mündung eine Düse, deren Schmelzedurchfluss mit einer Ventilnadel beeinflussbar, insbesondere unterbrechbar ist. Eine solche Heisskanaldüse ist mit Vorteil als eine Nadelverschlussdüse ausgebildet, deren Verschlussnadel mit einem unter Druck stehenden Fluid aktiv geöffnet oder freigegeben sowie aktiv geschlossen werden kann.

Die Verschlussnadel einer Nadelverschlussdüse kann pneumatisch mit gasförmigem Arbeitsmittel oder hydraulisch mit Öl als Arbeitsmittel und unter Einsatz eines Antriebszylinders, welcher beispielsweise einen auf die Verschlussnadel wirkenden Hebel betätigt, in die geöffnete bzw. geschlossene Stellung gebracht werden. Ein bekanntes, in Spritzgiessmaschinen verwendetes Verschlussorgan, das am Kopf eines Plastifizierungsaggregats angeordnet ist, ist eine Nadelverschlussdüse mit einem pneumatischen Nadelantrieb. Für diesen Nadelantrieb muss viel Raum zur Verfügung gestellt werden. Die grosse Kompressibiliät des gasförmigen Arbeitsmittels ist ein weiterer Nachteil. Weniger Raum wird bei einem hydraulischen Nadelantrieb benötigt, wie ein solcher bereits bei Heisskanaldüsen realisiert ist. Vorteilhafterweise ist dabei die Kompressibiliät des Arbeitsmittels, nämlich des Hydrauliköls, relativ klein. Doch auch bei solchen mit Hydrauliköl betriebenen Nadelantrieben ist der Raumbedarf in besonderen Fällen immer noch zu gross. Dies ist beispielsweise der Fall, wenn eine Polymerschmelze kaskadenartig mit einem Heisskanalsystem in ein Formwerkzeug einzuspeisen ist. Bei einem derartigen Heisskanalsystem ist es wünschenswert oder sogar erforderlich, dass die Einspeisestellen der Heisskanäle dicht nebeneinander angeordnet sind.

Aufgabe der Erfindung ist es, eine Vorrichtung mit Nadelverschlussdüse zu schaffen, bei der ein Nadelantrieb hinsichtlich Raumbedarf günstiger als bei der bekannten pneumatischen Lösung ausgebildet ist. Eine Lösung ist grundsätzlich mit einer Hydraulik möglich. Die bekannte Lösung ist aber hinsichtlich der genannten Aufgabe noch ungenügend. Die Aufgabe wird durch die im Anspruch 1 definierte Vorrichtung gelöst.

Die Vorrichtung mit Nadelverschlussdüse ist für eine Spritzgiessmaschine oder ein Spritzgiesswerkzeug zum Verarbeiten einer Polymerschmelze vorgesehen. Diese Vorrichtung umfasst einen Kanal für einen Schmelzestrom, eine Düse am Ausgang des Kanals, eine im Kanal geführte Verschlussnadel zum Verschliessen der Düse und einen Antriebszylinder mit Kolben, der als Nadelantrieb die Verschlussnadel bewegt. Dabei ist der Kolben mittels einem fluiden Arbeitsmittel antreibbar. Der Antriebszylinder ist innerhalb des Kanals angeordnet und ist Teil einer hydraulischen Einrichtung, bei der das fluide Arbeitsmittel ein verdichtetes Gas ist, dessen Druck grösser als 50 bar ist.

Das verdichtete Gas hat eine relativ kleine Kompressibilität und kann daher als ein hydraulisches Arbeitsmittel angesehen werden. Für ein ideales Gas ist die Kompressibilität gleich 2 10⁻⁷ Pa⁻¹ bei 50 bar (Kompressibilität χ = (∂ρ/∂ρ)T ρ⁻¹ = ρ⁻¹). Stickstoff N₂ ist näherungsweise ein ideales Gas.

Die abhängigen Ansprüche 2 bis 6 betreffen vorteilhafte Ausführungsformen der erfindungsgemässen Vorrichtung. Anlagen mit einer Spritzgiessmaschine, die eine erfindungsgemässe Vorrichtung umfasst, sind jeweils Gegenstand der Ansprüche 7 bis 10.

Nachfolgend wird die Erfindung anhand der Zeichnungen erläutert. Es zeigen:
- Fig. 1: eine erfindungsgemässe Nadelverschlussdüse mit längsgeschnittenem Schmelzekanal und
- Fig. 2: die Nadelverschlussdüse der Fig. 1 mit anderer Ansicht und längsgeschnittenem Antriebszylinder.

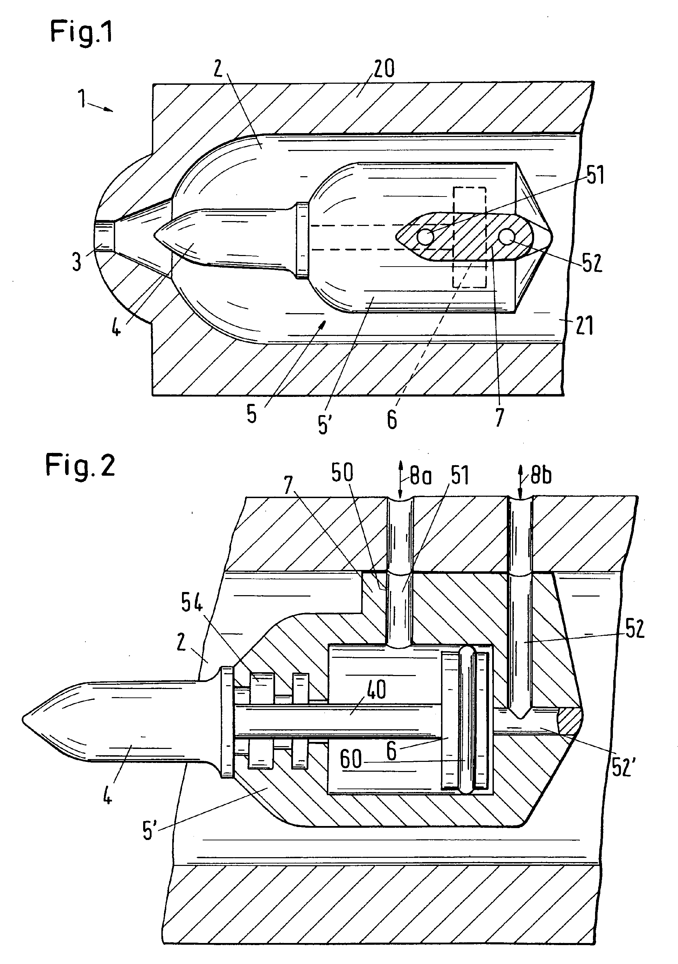

Eine erfindungsgemässe Nadelverschlussdüse 1 für eine Spritzgiessmaschine - siehe die Figuren 1 und 2 (zwei Ansichten, wobei die eine gegenüber der anderen um 90° um die Längsachse gedreht ist) - umfasst folgende Komponenten: einen Kanal 2, in dem im Betrieb eine Polymerschmelze zu einer Düse 3 fliesst; eine im Schmelzekanal 2 geführte Verschlussnadel 4 zum Stoppen des Schmelzestroms durch Verschliessen der Düse 3; und einen Nadelantrieb 5 mit einem torpedoförmigen Antriebszylinder 5' sowie einem Kolben 6 zum Bewegen der Verschlussnadel 4. Der Kolben 6 weist eine hitzebeständige Dichtung 60 auf und ist über einen Schaft 40 mit der Verschlussnadel 4 verbunden. Er wird erfindungsgemäss durch ein Arbeitsmittel angetrieben, das ein verdichtetes Gas ist, dessen Druck grösser als 50 bar ist. Der Druck des Gases kann Werte bis zu 600 bar annehmen.

Der Antriebszylinder 5' ist Teil einer hydraulischen Einrichtung und ist über Kanäle 51 und 52 mit weiteren, nicht dargestellten Komponenten dieser Einrichtung verbunden. (Die Doppelpfeile 8a und 8b deuten den Transport des fluiden Arbeitsmittels an.) Die Kanäle 51, 52 führen durch einen Steg 7, der über eine widerstandsfähige Verbindung 50 an der Kanalwand 20 (oder Gehäuse 20) befestigt ist. Der Kanal 52 mündet in eine zentrale Längsbohrung des Antriebszylinders 5', wobei diese Bohrung am äusseren Ende verschlossen ist. Der torpedoförmige Antriebszylinder 5' wird mit Vorteil über mehr als einen Steg 7 mit der Kanalwand 20 verbunden. Die Kanalwand 20 wird im Betrieb mit einer nicht dargestellten Heizung auf einer Temperatur gehalten, bei der die Polymerschmelze eine gute Fliessfähigkeit aufweist. Hinter dem Antriebszylinder 5' ist ein Bereich 21 des Kanals 2 in einer nicht gezeigten Form als Anschluss an ein Plastifizieraggregat (oder einen Plastifizierzylinder) ausgebildet.

Aus dem Antriebszylinder 5', der innerhalb des Kanals angeordnet ist, kann Arbeitsmittel durch eine Dichtung 54 austreten und für die Polymerschmelze eine geringe Verunreinigung zur Folge haben. Es wird daher mit Vorteil für das Arbeitsmittel ein Stoff gewählt, der hinsichtlich dieser Verunreinigung einen unproblematischen Einfluss auf die Qualität eines zu fertigenden Spritzgussteils hat. In Bezug auf diese unproblematische Qualitätsbeeinflussung sind mindestens folgende zwei Fälle unterscheidbar: a) Das von der Polymerschmelze aufgenommene Gas bleibt im Spritzgussteil gelöst. Insbesondere kann sich die Verunreinigung nach der Fertigung des Spritzgussteils aus diesem aufgrund von Diffusion verflüchtigen. b) Das von der Polymerschmelze aufgenommene Gas wirkt als ein physikalisches Triebmittel, das allein oder zusammen mit einem weiteren Treibmittel im Spritzgussteil zur Ausbildung von Bläschen führt.

Die Dichtung 54 ist als dreistufiger Abstreifer ausgebildet. Schmelze, die an der Oberfläche des Schafts 40 haftet, wird durch diesen Abstreifer daran gehindert, in den Zylinderraum des Antriebszylinders 5' einzudringen.

Als fluides Arbeitsmittel kann CO₂, N₂, Luft, ein Edelgas, Wasserdampf oder ein Gemisch von mindestens zwei dieser Gase (oder Dampf) verwendet werden. Das verdichtete Gas kann sich in einem thermodynamischen Zustand befinden (im Arbeitszylinder), der überkritisch ist.

Die Nadelverschlussdüse 1 kann ein Verschlussorgan am Kopf eines Plastifizierzylinders bilden, und/oder sie kann in einem Heisskanal angeordnet sein. Eine Anlage kann eine Mehrzahl von Schmelzekanälen umfassen, die jeweils eine Nadelverschlussdüse 1 enthalten.

Der Antriebszylinder kann an eine lokale Dosierungsstation für das fluide Arbeitsmittel angeschlossen sein. Es kann ein Speicher für ein verdichtetes Gas vorgesehen sein. Dieses Gas lässt sich sowohl als fluides Arbeitsmittel für die Nadelverschlussdüse als auch als Treibmittel für das Imprägnieren verwenden.

Bei einer vorteilhaften Anlage, die erfindungsgemässe Vorrichtungen mit hydraulischen Nadelverschlussdüse 1 umfasst, kann die Nadelverschlussdüse stromabwärts nach einem Plastifizierzylinder angeordnet sein. Insbesondere kann diese Nadelverschlussdüse 1 das Verschlussorgan am Kopf des Plastifizierzylinders bilden.

Bei einer weiteren erfindungsgemässen Anlage wird die Polymerschmelze durch eine Mehrzahl von Heisskanälen kaskadenartig in ein Formwerkzeug eingespeist. Dabei können die Einspeisestellen dichter angeordnet sein als bei bekannten Anlagen. Benachbarte Einspeisestellen sind in Abständen anordenbar, die in Relation zu den Durchmessern der Antriebszylinder jeweils kleiner als das Fünffache des grössten dieser Zylinderdurchmesser sind. Vorzugsweise sind diese Abstände oder einzelne dieser Abstände kleiner als das Doppelte des Zylinderdurchmessers. In besonderen Fällen nehmen die Abstände minimale Werte an, welche in Bezug darauf minimal sind, wie dies aufgrund einer konstruktiven Ausgestaltung der Heisskanäle möglich ist.

## Patentansprüche

1. Vorrichtung mit Nadelverschlussdüse (1) für eine Spritzgiessmaschine oder ein Spritzgiesswerkzeug zum Verarbeiten einer Polymerschmelze, welche Vorrichtung einen Kanal (2) für einen Schmelzestrom, eine Düse (3) am Ausgang des Kanals, eine im Kanal geführte Verschlussnadel (4) zum Verschliessen der Düse und einen Nadelantrieb (5) mit Antriebszylinder (5') sowie Kolben (6) zum Bewegen der Verschlussnadel umfasst, wobei der Kolben, der mit der Verschlussnadel verbunden ist, mittels einem fluiden Arbeitsmittel antreibbar ist, **dadurch gekennzeichnet, dass** der Antriebszylinder innerhalb des Kanals angeordnet ist und Teil einer hydraulischen Einrichtung ist, bei der das fluide Arbeitsmittel ein verdichtetes Gas ist, dessen Druck grösser als 50 bar ist.

2. Vorrichtung nach Anspruch 1, **dadurch gekennzeichnet, dass** für das fluide Arbeitsmittel ein Stoff gewählt ist, der hinsichtlich einer geringen Verunreinigung der Polymerschmelze durch aus dem Antriebszylinder (5') austretendes Arbeitsmittel einen unproblematischen Einfluss auf die Qualität eines zu fertigenden Spritzgussteils hat, und dass in Bezug auf diese unproblematische Qualitätsbeeinflussung mindestens folgende zwei Fälle unterscheidbar sind:
a) dass das von der Polymerschmelze aufgenommene Gas im Spritzgussteil gelöst bleibt und insbesondere nach der Fertigung des Spritzgussteils sich aus diesem aufgrund von Diffusion verflüchtigt,
b) oder dass das von der Polymerschmelze aufgenommene Gas als ein physikalisches Triebmittel wirkt, das allein oder zusammen mit einem weiteren Treibmittel im Spritzgussteil zur Ausbildung von Bläschen führt.

3. Vorrichtung nach Anspruch 1 oder 2, **dadurch gekennzeichnet, dass** das Gas CO₂, N₂, Luft, ein Edelgas, Wasserdampf oder ein Gemisch von mindestens zwei dieser Gase ist

4. Vorrichtung nach einem der Ansprüche 1 bis 3, **dadurch gekennzeichnet, dass** das verdichtete Gas sich in einem thermodynamischen Zustand befindet, der überkritisch ist.

5. Vorrichtung nach einem der Ansprüche 1 bis 4, **dadurch gekennzeichnet, dass** die oder eine Nadelverschlussdüse (1) ein Verschlussorgan am Kopf eines Plastifizierzylinders bildet, und/oder dass die oder eine Nadelverschlussdüse in einem Heisskanal angeordnet ist, wobei insbesondere dieser Heisskanal einer unter einer Mehrzahl von Schmelzekanälen (2) sein kann.

6. Vorrichtung nach einem der Ansprüche 1 bis 5, **dadurch gekennzeichnet, dass** der Antriebszylinder (5') an eine lokale Dosierungsstation für das fluide Arbeitsmittel angeschlossen ist.

7. Anlage mit einer Spritzgiessmaschine, die eine Vorrichtung mit einer hydraulischen Nadelverschlussdüse (1) gemäss einem der Ansprüche 1 bis 6 umfasst, **dadurch gekennzeichnet, dass** stromabwärts nach einem Plastifizierzylinder die Nadelverschlussdüse angeordnet ist, und dass insbesondere die Nadelverschlussdüse das Verschlussorgan am Kopf des Plastifizierzylinders bildet.

8. Anlage nach Anspruch 7, **dadurch gekennzeichnet, dass** zwischen dem Plastifizierzylinder und der Nadelverschlussdüse (1) ein Imprägnierungsaggregat angeordnet ist, in den der Nadelantrieb integriert ist, und dass in diesem Aggregat die Polymerschmelze mit einem physikalischen Treibmittel imprägnierbar ist.

9. Anlage nach Anspruch 8, **dadurch gekennzeichnet, dass** ein Speicher für ein verdichtetes Gas vorgesehen ist, und dieses Gas sowohl als fluides Arbeitsmittel für die Nadelverschlussdüse (1) als auch als Treibmittel für das Imprägnieren verwendbar ist.

10. Anlage nach einem der Ansprüche 7 bis 9, **dadurch gekennzeichnet, dass** die Polymerschmelze durch hydraulische Nadelverschlussdüsen (1) einer Mehrzahl von Heisskanälen und über eine dichte Anordnung der Einspeisestellen kaskadenartig in ein Formwerkzeug einspeisbar ist, dass benachbarte Einspeisestellen in Abständen angeordnet sind, die in Relation zu den Durchmessern der Antriebszylinder (5') jeweils kleiner als das Fünffache des grössten dieser Zylinderdurchmesser sind, und dass vorzugsweise diese Abstände oder einzelne dieser Abstände kleiner als das Doppelte des Zylinderdurchmessers sind, insbesondere minimale Werte haben in Bezug darauf, wie sie aufgrund einer konstruktiven Ausgestaltung möglich sind.
